# EUROPEAN PATENT APPLICATION

(11) **EP 3 839 692 A1**
(43) Date of publication of application: **23.06.2021**
(21) Application number: 19218514.8
(22) Date of filing: 20.12.2019
(51) Int. Cl.: G05D 23/19

(54) **ELECTRONIC RADIATOR THERMOSTAT**

(71) Applicant: Pittway Sarl, 1180 Rolle (CH)
(72) Inventor: AITKEN, Keith, Bo'ness EH51 9QZ (GB); FERGUSON, Colin T., Hamilton ML3 7JY (GB)
(74) Representative: Sturm, Christoph

(57) **Abstract**

Electronic radiator thermostat (10) comprising: a housing (11), an electrical motor (14) positioned within the housing (11), an actuation pin (15) driven by the electrical motor (11) configured to act on a radiator valve to open or close the radiator valve, a gear box (17) transferring a rotational movement of the electrical motor (14) into a linear movement of the actuation pin (15), and a controller (18) for operating the electrical motor (14). The controller (18) is a PWM controller (18) or a PFM controller (18). The electrical motor (14) can be operated by the PWM controller (18) or by the PFM controller (18) in at least two operation modes differing by the duty cycle of the pulse width modulation or by the frequency of the pulse frequency modulation to provide different motor speeds and thereby different noise levels for opening and closing the radiator valve.

## Description

The invention relates to an electronic radiator thermostat.

EP 0 961 958 B1 discloses an electronic radiator thermostat comprising a housing, an electrical motor positioned within the housing, an actuation pin driven by the electrical motor and being configured to act on a radiator valve to open or close the radiator valve, and a gear box transferring a rotational movement of the electrical motor into a linear movement of the actuation pin. The electrical motor is a direct current motor being operated by a controller.

Users of such electronic radiator thermostats sometimes find the operation of the same being too noisy for use in a bedroom or quiet environment.

Against this background, a novel electronic radiator thermostat is provided being less noisy in operation. The novel electronic radiator thermostat according to claim 1 comprises a PWM (pulse width modulation) controller or a PFM (pulse frequency modulation) controller for the operation of the electrical motor. The electrical motor can be operated by the PWM controller or by the PFM controller in at least two operation modes differing by the duty cycle of the pulse width modulation or by the frequency of the pulse frequency modulation to provide different motor speeds and thereby different noise levels during operation for opening and closing the radiator valve. Such an electronic radiator thermostat is suitable for use in a bedroom or quiet environment.

According to a preferred embodiment, the PWM controller is configured to operate the electrical motor at least in a day operation mode having a first duty cycle and in a night operating mode having a second, lower duty cycle. Such an electronic radiator thermostat is preferred for use in a bedroom.

Alternatively, the PFM controller is configured to operate the electrical motor at least in a day operation mode having a first frequency and in a night operating mode having a second, lower frequency. Such an electronic radiator thermostat is preferred for use in a bedroom.

According to a preferred embodiment, the beginning time and end time of the night operating mode or the beginning time and end time of the day operating mode is programmable by a user through a user interface of the electronic radiator thermostat. The operation of such an electronic radiator thermostat can be adapted by the user according to the actual user requirements.

According to a preferred embodiment, the night operating mode is activatable and deactivatable by a user through the user interface of the electronic radiator thermostat. The operation of such an electronic radiator thermostat can be adapted by the user according to the actual user requirements.

Preferred developments of the invention are provided by the dependent claims and the description of the drawings. Exemplary embodiments are explained in more detail on the basis of the drawing, in which:
- Figure 1: shows a side view of an electronic radiator thermostat;
- Figure 2: shows a cross section through the electronic radiator thermostat.

The present invention relates to an electronic radiator thermostat 10.

The electronic radiator thermostat 10 comprises a housing 11. In the shown embodiment the housing 11 has a first housing part 12 and a second housing part. 13.

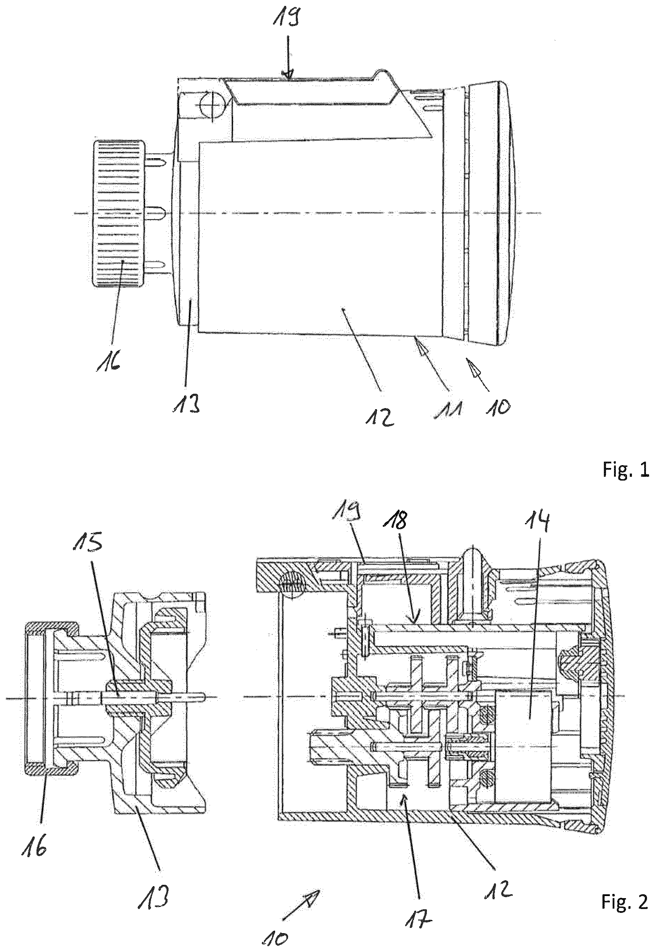

Fig. 1 shows the electronic radiator thermostat 10 is a status in which the housing parts 12, 13 are assembled together. Fig. 2 shows the electronic radiator thermostat 10 in which the housing parts 12, 13 are disassembled from each other.

The electronic radiator thermostat 10 comprises an electrical motor 14 positioned within the housing 11. In the shown embodiment the electrical motor 14 is positioned within the first housing part 12.

The electrical motor 14 may be a direct current motor.

Electrical energy needed to operate the electrical motor 14 may be provided by a battery positioned within the housing 11, preferably within the first housing part 12.

The electronic radiator thermostat 10 further comprises an actuation pin 15 positioned within the housing 11. In the shown embodiment the actuation pin 15 is positioned within the second housing part 13. The second housing part 13 carries a coupling nut 16 through which the electronic radiator thermostat 10 can be mounted to a radiator (not shown).

The actuation pin 15 is driven by the electrical motor 14 and configured to act on a radiator valve to open or close the radiator valve (not shown).

The electrical motor 14 drives the actuation pin 15 through a gear box 17 of the electronic radiator thermostat 10. The gear box 17 transfers a rotational movement of the electrical motor 14 into a linear movement of the actuation pin 15. The gear box 17 is positioned within the housing 11. In the shown embodiment the gear box 17 is positioned within the first housing part 12.

The electronic radiator thermostat 10 further comprises a controller 18 for operating the electrical motor 14. The controller 18 is positioned within the housing 11. In the shown embodiment the controller 18 is positioned within the first housing part 12.

According to a first embodiment of the present invention, the electrical motor 14 is operated by a PWM (pulse width modulation) controller 18.

According to the first embodiment of the present invention, the the electrical motor 14 can be operated by the PWM controller 18 in at least two operation modes differing by the duty cycle of the pulse width modulation to provide different motor speeds and thereby different noise levels for opening and closing the radiator valve.

Preferably, the PWM controller 18 is configured to operate the electrical motor 14 at least in a day operation mode having a first duty cycle and in a night operating mode having a second, lower duty cycle. When using the night operating mode the speed of the electrical motor 14 is slower causing less noise. Such a night operating mode is preferred for the use of the electronic radiator thermostat in a bedroom or quiet environment.

According to a second embodiment of the present invention, the electrical motor 14 is operated by a PFM (pulse frequency modulation) controller 18.

According to the second embodiment of the present invention, the electrical motor 14 can be operated by the PFM controller 18 in at least two operation modes differing by the frequency of the pulse frequency modulation to provide different motor speeds and thereby different noise levels for opening and closing the radiator valve.

Preferably, the PFM controller 18 is configured to operate the electrical motor 14 at least in a day operation mode having a first frequency and in a night operating mode having a second, lower frequency. When using the night operating mode the speed of the electrical motor 14 is slower causing less noise. Such a night operating mode is preferred for the use of the electronic radiator thermostat in a bedroom or quiet environment.

The beginning time and end time of the night operating mode or the beginning time and end time of the day operating mode is programmable by a user through a user interface 19 of the electronic radiator thermostat 10. The night operating mode may be activatable and deactivatable by a user through the user interface 19 of the electronic radiator thermostat 10.

This present invention proposes to use different operation modes of an electronic radiator thermostat 10 differing by the duty cycle of the pulse width modulation or by the frequency of the pulse frequency modulation of the controller 18 that operates the electrical motor 14 of an electronic radiator thermostat 10. A lower duty cycle of the pulse width modulation or a lower frequency of the pulse frequency modulation drives the motor 14 more slowly, reducing the noise levels.
During the installation process of the electronic radiator thermostat 10 the user may be offered through the use interface 19 the choice to implement the night operating mode.

The choice could be given automatically, for example, if a user selects "Bedroom" as the name of a heating zone in which the electronic radiator thermostat 10 becomes installed.

Alternatively it could be offered on all heating zone to allow for flexibility. A user adjustable time schedule can also be enabled for this feature, for example to use the night operation mode e.g. between 10pm and 6am.

### List of reference signs

- 10: electronic radiator thermostat
- 11: housing
- 12: first housing part
- 13: second housing part
- 14: electrical motor
- 15: actuation pin
- 16: coupling nut
- 17: gear box
- 18: controller
- 19: user interface

## Claims

1. Electronic radiator thermostat (10), comprising:
a housing (11),
an electrical motor (14) positioned within the housing (11),
an actuation pin (15) driven by the electrical motor (11) configured to act on a radiator valve to open or close the radiator valve,
a gear box (17) transferring a rotational movement of the electrical motor (14) into a linear movement of the actuation pin (15),
a controller (18) for operating the electrical motor (14),
**characterized in that**
the controller (18) is a PWM controller (18) or a PFM controller (18),
the electrical motor (14) can be operated by the PWM controller (18) or by the PFM controller (18) in at least two operation modes differing by the duty cycle of the pulse width modulation or by the frequency of the pulse frequency modulation to provide different motor speeds and thereby different noise levels during operation.

2. Electronic radiator thermostat as claimed in claim 1, **characterized in that** the PWM controller (18) is configured to operate the electrical motor (14) at least in a day operation mode having a first duty cycle and in a night operating mode having a second, lower duty cycle.

3. Electronic radiator thermostat as claimed in claim 1, **characterized in that** the PFM controller (18) is configured to operate the electrical motor (14) at least in a day operation mode having a first frequency and in a night operating mode having a second, lower frequency.

4. Electronic radiator thermostat as claimed in claim 2 or 3, **characterized in that** the beginning time and end time of the night operating mode or the beginning time and end time of the day operating mode is programmable by a user through a user interface (19) of the electronic radiator thermostat (10).

5. Electronic radiator thermostat as claimed in one of claims 2 to 4, **characterized in that** the night operating mode is activatable and deactivatable by a user through a user interface (19) of the electronic radiator thermostat (10).
